# EUROPEAN PATENT SPECIFICATION

(11) **EP 0 653 329 B1**
(45) Date of publication and mention of the grant of the patent: **12.02.1997**
(21) Application number: 93308302.4
(22) Date of filing: 19.10.1993
(51) Int. Cl.: B60R 9/045

(54) **Article carrier**
Lastenträger
Porte-bagages

(43) Date of publication of application: 17.05.1995
(73) Proprietor: JAC PRODUCTS, INC., MI 48108 (US)
(72) Inventor: Bott, John Anthony, Grosse Pointe Shores, Michigan 48236 (US); Cucheran, John Stephen, Lake Orion, Michigan 48035 (US)
(74) Representative: Senior, Alan Murray

(56) References cited:
- US-A- 4 406 386
- US-A- 4 469 261
- US-A- 4 982 886
- US-A- 5 190 198
- US-A- 5 232 139

## Description

The present invention relates to an article carrier for an automotive vehicle, more particularly to, an adjustable cross bar for an article carrier on an automotive vehicle.

Automobile luggage racks frequently employ two separate sub assemblies or portions: a rectangular framework which surrounds the load to be carried and a plurality of slats which rest on the roof or other automobile body surface and carry the weight of the load. In such constructions, the framework and the slats are often secured to the automobile body independently of one another. In still another automobile luggage or article carrier, a cross bar replaces the framework as the means for confining the luggage upon the slats.

In US-A-4 182 471 there is disclosed an article carrier for automotive vehicles having cross bars which can be adjusted on the slats and are easily removed, interchanged or adjusted in position on the slats in accordance with the needs of the user. This construction has achieved significant commercial success. Nevertheless, some problems have been experienced in providing an aesthetically more pleasing and simple to use bracket. Therefore, it is believed that a need exists for a crossbar which has an attractive appearance of modern luggage carriers but which possesses a degree of adjustability and ease of operation.

US-A-4 982 886, upon which the preamble of claim 1 is based, also discloses an article carrier.

According to the present invention there is provided an article carrier for an automobile, comprising:
a plurality of slats fixedly secured on a generally horizontally extending exterior automobile body surface;
a pair of bracket members disposed upon selected ones of said slats;
a restraining bar extending laterally between and secured adjacent its opposite ends to said bracket members, said restraining bar being located above the automobile body surface and said slats, and each said selected slat including a plurality of selectable longitudinally spaced apertures extending through a wall of said slat disposed generally parallel to the automobile body surface; and
a locking assembly on each of said bracket members for cooperating with said apertures of said selected slats for detachably securing and longitudinally adjusting said bracket members and said restraining bar upon said selected slats, each locking assembly including a latching member and an associated manually operable actuating member, said latching member being disposed generally perpendicular to the automobile body surface and including a shoulder portion formed thereon and protruding generally laterally of said latching member, and its associated said actuating member being moveable linearly generally parallel to said selected slats and generally perpendicular to its associated said latching member for cooperating with said associated latching member to cause or permit movement of said latching member into and out of engagement with said apertures;
each said actuating member including a sloped portion adapted to engage an undersurface of the shoulder portion of its associated said latching member, said sloped portion being arranged to urge said associated latching member out of latching engagement with one of said apertures when said actuating member is moved linearly in a first direction, and to allow said latching member into engagement with said one aperture when said actuating member is moved linearly in a second direction;
characterised in that said sloped portion of each said actuating member extends into an upper horizontal portion onto which the shoulder portion of its associated said latching member is slidable when said actuating member is moved fully in said first direction, to hold its associated said latching member in a position in which it is out of latching engagement with a said aperture.

An embodiment of apparatus in accordance with the present invention will now be described, by way of example only, with reference to the accompanying drawings, in which:
Figure 1 is a fragmentary perspective view of an article carrier mounted on a portion of an automobile and constructed in accordance with the principles of the present invention;
Figure 2 is an enlarged sectional view of the structure illustrated in Figure 1 taken along the line 2-2 in Figure 3.
Figure 3 is an elevational view with a portion partially broken away of the structure illustrated in Figure 1 taken in the direction of the arrow 3 therein showing a latching member in an engaged position; and
Figure 4 is a view of the structure similarly illustrated in Figure 3 showing the latching member in a disengaged position.

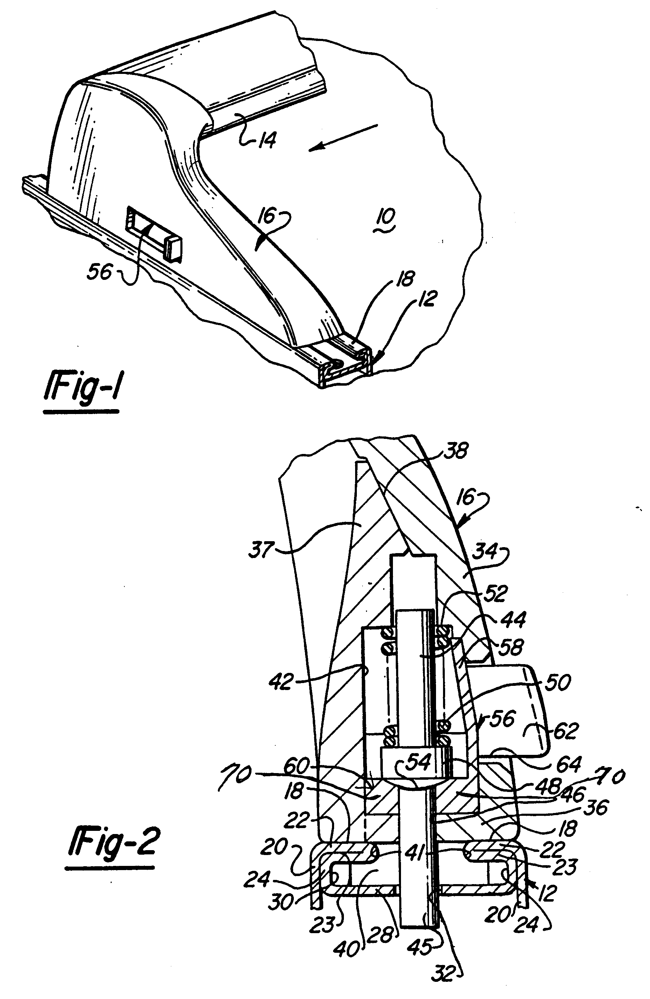

Figure 1 depicts a generally horizontal exterior body portion 10 of an automobile such as a trunk lid or automobile roof. A slat 12 such as a side rail is mounted on the body portion 10 in a known manner. Typically, a plurality of identical, parallel, transversely spaced slats 12 are mounted on the body portion 10. Mounted on a pair of slats 12 is a raised tubular cross bar 14 which is fitted at its opposite ends onto brackets 16. Each bracket 16 rests on a broad upwardly facing supporting surface 18 on the top of the slats 12.

Referring to Figure 2, the slat 12 has a pair of transversely spaced side walls 20 extending upwardly from the body portion 10. An upper wall 22 extends inwardly from the side walls 20 toward each other. The upper surface 18 is generally horizontal or flat on the top of upper wall 22. The upper wall 22 wraps back on itself and extends toward the side wall 20 to form an interior wall portion 23. An inner wall 24 extends downwardly toward the body portion 10 from the interior wall portion 23 of the upper wall 22. The inner walls 24 extend inwardly toward each other to form a bottom wall 28. The walls 20, 22, 23, 24, and 28 are preferably integral. The walls 23, 24, and 28 form a groove or channel 30 which is wider at its bottom than at its top. The channel 30 extends the length of the slat 12. The slat 12 includes a plurality of longitudinally spaced openings or apertures 32 to allow the bracket 16 to be located at various predetermined positions along the length of the slat 12.

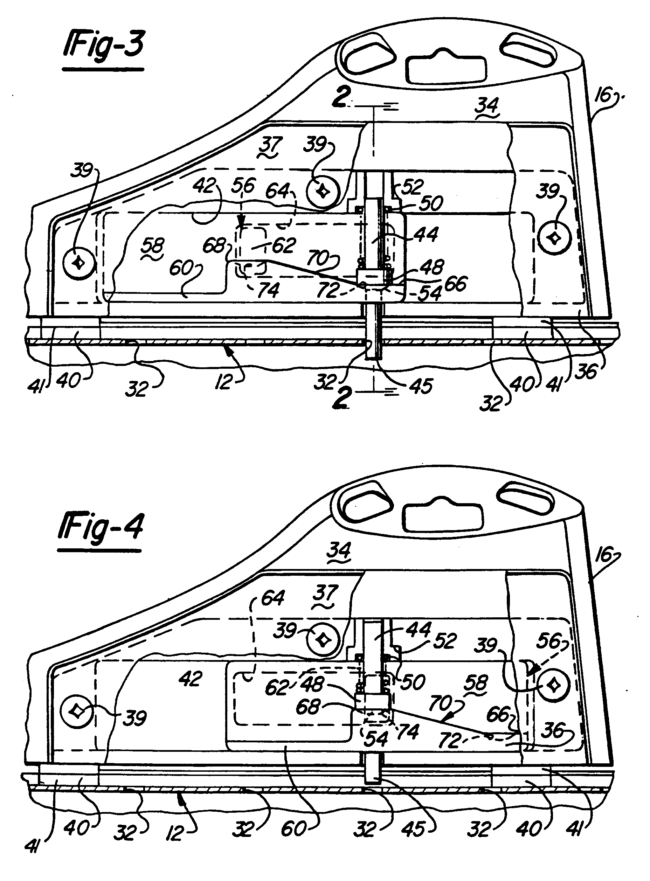

The bracket 16 includes a generally vertical and arcuate outer wall 34 connected to a generally horizontal bottom wall 36 which rests upon the upper surface 18 of slat 12. Preferably, the outer wall 34 and bottom wall 36 are integral. The bottom wall 36 abuts a generally vertical and arcuate inner wall 37 which also abuts the outer wall 34 along surface 38. The inner wall 37 is connected to the outer wall 34 by means such as fasteners 39 as shown in Figures 3 and 4. The bracket 16 also includes a pair of longitudinally spaced foot or base portions 40 having an inverted "T" shape to prevent the bracket 16 from separating vertically with the slat 12. This is accomplished by a groove or slot 41 formed in the base portion 40 in which a portion of walls 22 and 23 are disposed.

The outer 34, bottom 36 and inner wall 37 form a cavity 42. A latching member 44 is disposed vertically in the cavity 42. The bracket 16 is adjustable and moveable along the slat 12 by means of the latching member 44. The latching member 44 disengages the bracket 16 from the slat 12 to allow the bracket 16 to be moved along the slat 12. When the bracket 16 is placed in a desired location along slat 12, the latching member 44 is moved or actuated to engage the bracket 16 with the slat 12 to retain the bracket 16 in position on the slat 12.

The latching member 44 is formed as a circular shaft or dowel and has one end 45 which extends through an aperture 46 in the bottom wall 36. The end 45 engages and disengages the aperture 32 of the slat 12. The latching member 44 includes a shoulder portion 48 which is greater in diameter than the rest of the latching member 44. A spring 50 is disposed about the latching member 44 at its other end between the shoulder portion 48 and a shoulder 52 formed near the top of the cavity 40. The spring 50 biases the latching member 44 toward the slat 12 such that the end 45 engages the aperture 32. The shoulder portion 48 also includes a camming surface 54 which is arcuate or hemi-spherical and its function will be described subsequently herein.

An actuating member 56 is also disposed within the cavity 42. The actuating member 56 is generally L-shaped and has a generally vertical wall 58 and a horizontal wall 60. The actuating member 56 includes a handle portion 62 connected to the vertical wall 58 and extending through a generally rectangular aperture 64 in the outer wall 34 of the bracket 16. The handle portion 62 is grasped and manually moved by an operator to actuate the latching member 44. The horizontal wall 60 rests upon the bottom wall 36 of the bracket 16. The horizontal wall 60 slides along the bottom wall 36 when the handle portion 62 is manually moved by the operator.

Referring to Figures 3 and 4, the horizontal wall 60 includes a lower horizontal portion 66, an upper horizontal portion 68, and an inclined or ramp portions 70 interconnecting the upper 68 and lower 66 horizontal portions. The upper 68 and lower 66 horizontal portions include detents 72 and 74, respectively. The ramp portion 70 operatively cooperates with the camming surface 54 of the latching member 44 to move the latching member 44 upwardly and downwardly to disengage and engage the aperture 32 of the slat 12, respectively.

In operation, an operator grasps the handle portion 62 the latching member 44 is in the engaged position with its end 45 disposed in aperture 32 of slat 12 as illustrated in Figure 3. The operator begins to move the handle portion 62 longitudinally. This causes the camming surface 54 to cooperate with the detent 72 and push the latching member 44 upward against the force of the spring 50. As the handle portion 62 continues to move longitudinally, the camming surface 54 moves upwardly along the ramp portion 70 against the force of the spring 50. When the handle portion 62 is stopped near a wall defining the aperture 64, the camming surface 54 rests in the detent 74 and is held in there by the spring 50. As illustrated in Figure 4, the latching member 44 is in the disengaged position with its end 45 disposed above and out of the aperture 32 of the slat 12. The bracket 16 may then by moved and positioned at another predetermined location along the slat 12 with the end 45 of the latching member 44 vertically aligned with a corresponding aperture 32 in the slat 12. The operation is reversed for engaging the latching member 44 with the slat 12.

## Claims

1. An article carrier for an automobile, comprising:
a plurality of slats (12) fixedly secured on a generally horizontally extending exterior automobile body surface (10);
a pair of bracket members (16) disposed upon selected ones of said slats (12);
a restraining bar (14) extending laterally between and secured adjacent its opposite ends to said bracket members (16), said restraining bar (14) being located above the automobile body surface and said slats (12), and each said selected slat including a plurality of selectable longitudinally spaced apertures (32) extending through a wall (28) of said slat disposed generally parallel to the automobile body surface (10); and
a locking assembly (56,44) on each of said bracket members (16) for cooperating with said apertures (32) of said selected slats (12) for detachably securing and longitudinally adjusting said bracket members and said restraining bar (14) upon said selected slats, each locking assembly including a latching member (44) and an associated manually operable actuating member (56), said latching member (44) being disposed generally perpendicular to the automobile body surface (10) and including a shoulder portion (48) formed thereon and protruding generally laterally of said latching member, and its associated said actuating member (56) being moveable linearly generally parallel to said selected slats (12) and generally perpendicular to its associated said latching member (44) for cooperating with said associated latching member to cause or permit movement of said latching member into and out of engagement with said apertures (32);
each said actuating member (56) including a sloped portion (70) adapted to engage an undersurface of the shoulder portion (48) of its associated said latching member (44), said sloped portion (70) being arranged to urge said associated latching member out of latching engagement with one of said apertures (32) when said actuating member (56) is moved linearly in a first direction, and to allow said latching member (44) into engagement with said one aperture (32) when said actuating member is moved linearly in a second direction;
characterised in that said sloped portion (70) of each said actuating member (56) extends into an upper horizontal portion (68) onto which the shoulder portion (48) of its associated said latching member (44) is slidable when said actuating member (56) is moved fully in said first direction, to hold its associated said latching member (44) in a position in which it is out of latching engagement with a said aperture (32).

2. The article carrier of claim 1, wherein the sloped portion (70) of each said actuating member (56) includes a pair of sloped surfaces (70) each adapted to engage the undersurface of the shoulder portion (48) of its associated said latching member (44), said associated said latching member extending between said two sloped surfaces.

3. The article carrier of claim 1 or claim 2, wherein each locking assembly further includes a biasing member (50) for biasing one end of its said latching member (44) into engagement with a said aperture (32).

4. The article carrier of any one of the preceding claims, wherein said actuating member (56) has a generally L-shaped configuration, a handle portion (62) adapted to be grasped and manually moved by an operator, a horizontal wall (60) and a vertical wall (58), said handle portion being connected to said vertical wall.

5. The article carrier of any one of the preceding claims, wherein the sloped portion (70) of each said actuating member (56) also extends into a lower horizontal portion (66) at the opposite end of the sloped portion to its said upper horizontal portion (68).

6. The article carrier of any one of the preceding claims, wherein said shoulder portion (48) of each said latching member (44) includes a camming surface (54) cooperable with the sloped portion (70) of its associated actuating member (56) to move said latching member vertically as said actuating member is moved.

7. The article carrier of claim 6, wherein each said upper horizontal portion (68) includes a detent (74) for receiving the camming surface (54) of its associated said latching member (44) to prevent further movement of said latching member.

8. The article carrier of claim 7 when dependent on claim 5, wherein each said lower horizontal portion (66) includes a detent (72) for receiving the camming surface (54) of its associated said latching member (44) to prevent further movement of said latching member.

## Patentansprüche

1. Lastenträger für ein Kraftfahrzeug, mit:
einer Vielzahl von Leisten (12), die fest an einer sich im allgemeinen horizontal erstreckenden äußeren Kraftfahrzeugkarosseriefläche (10) angebracht sind,
einem Paar von Trägerelementen (16), die sich auf ausgewählten Leisten der Leisten (12) befinden,
einer Haltestange (14), die sich seitlich zwischen den Trägerelementen (16) erstreckt und nahe an ihren gegenüberliegenden Enden an diesen befestigt ist, wobei die Haltestange (14) oberhalb der Kraftfahrzeugkarosseriefläche und der Leisten (12) angeordnet ist und jede dieser ausgewählten Leisten eine Vielzahl von auswählbaren, in Längsrichtung beabstandeten Öffnungen (32) umfaßt, die sich durch eine Wand (28) dieser Leiste erstrecken, die im allgemeinen parallel zu der Kraftfahrzeugkarosserieoberfläche (10) angeordnet ist, und
einer Verriegelungsanordnung (56, 44) auf jedem der Trägerelemente (16), die mit den Öffnungen (32) der ausgewählten Leisten (12) dahingehend zusammenwirken, daß die Trägerelemente und die Haltestange (14) auf den ausgewählten Leisten abnehmbar befestigt und in Längsrichtung eingestellt werden können, wobei jede Verriegelungsanordnung ein Verriegelungselement (44) und ein zugehöriges, manuell betätigbares Betätigungselement (56) umfaßt, wobei das Verriegelungselement (44) im allgemeinen senkrecht zu der Kraftfahrzeugkarosserieoberfläche (10) angeordnet ist und einen Schulterabschnitt (48) umfaßt, der darauf ausgebildet ist und im allgemeinen seitlich von dem Verriegelungselement vorsteht, und wobei das zugehörige Betätigungselement (56) im allgemeinen parallel zu den ausgewählten Leisten (12) und im allgemeinen senkrecht zu dem zugehörigen Verriegelungselement (44) linear bewegbar ist, um mit dem zugeordneten Verriegelungselement dahingehend zusammenzuwirken, eine Bewegung des Verriegelungselements zu bewirken bzw. zu erlauben, so daß dieses mit den Öffnungen (32) in Eingriff oder außer Eingriff kommt,
wobei jedes Betätigungselement (56) einen abgeschrägten Abschnitt (70) umfaßt, der mit einer Unterseite des Schulterabschnitts (48) des zugehörigen Verriegelungselements (44) in Eingriff kommen kann, wobei der abgeschrägte Abschnitt (70) angeordnet ist, um das zugehörige Verriegelungselement aus dem einrastenden Eingriff mit einer der Öffnungen (32) herauszudrücken, wenn das Betätigungselement (56) in einer ersten Richtung linear bewegt wird, und um es zu erlauben, daß das Verriegelungselement (44) mit der einen Öffnung (32) in Eingriff kommen kann, wenn das Betätigungselement in einer zweiten Richtung linear bewegt wird,
dadurch gekennzeichnet, daß sich der abgeschrägte Abschnitt (70) jedes Betätigungselements (56) in einen oberen horizontalen Abschnitt (68) erstreckt, auf dem der Schulterabschnitt (48) des zugehörigen Verriegelungselements (44) gleiten kann, wenn das Betätigungselement (56) vollständig in der ersten Richtung bewegt wird, um das zugehörige Verriegelungselement (44) in einer Position zu halten, in der sich dieses nicht in einem einrastenden Eingriff mit der Öffnung (32) befindet.

2. Lastenträger nach Anspruch 1, bei dem der abgeschrägte Abschnitt (70) jedes Betätigungselements (56) ein Paar von abgeschrägten Oberflächen (70) umfaßt, die jeweils so ausgelegt sind, daß sie mit der Unterseite des Schulterabschnitts (48) jedes zugehörigen Verriegelungselements (44) in Eingriff kommen können, wobei sich das zugehörige Verriegelungselement zwischen den beiden abgeschrägten Oberflächen erstreckt.

3. Lastenträger nach Anspruch 1 oder Anspruch 2, bei dem jede Verriegelungsanordnung außerdem ein Vorspannelement (50) zum Vorspannen eines Endes des Verriegelungselements (44) in Eingriff mit einer Öffnung (32) umfaßt.

4. Lastenträger nach einem der vorhergehenden Ansprüche, bei dem das Betätigungselement (56) im allgemeinen L-förmig ist, einen Griffabschnitt (62), der so ausgelegt ist, daß er von einer Bedienperson ergriffen und manuell bewegt werden kann, eine horizontale Wand (60) und eine vertikale Wand (58) aufweist, wobei der Griffabschnitt mit der vertikalen Wand verbunden ist.

5. Lastenträger nach einem der vorhergehenden Ansprüche, bei dem sich der abgeschrägte Abschnitt (70) jedes Betätigungselements (56) auch in einen unteren horizontalen Abschnitt (66) erstreckt, und zwar an dem entgegengesetzten Ende des zu dem oberen horizontalen Abschnitt (68) hin abgeschrägten Abschnitts.

6. Lastenträger nach einem der vorhergehenden Ansprüche, bei dem der Schulterabschnitt (48) jedes Verriegelungselements (44) eine Nockenfläche (54) umfaßt, die mit dem abgeschrägten Abschnitt (70) des dazugehörigen Betätigungselements (56) dahingehend zusammenwirken kann, das Verriegelungselement vertikal zu bewegen, wenn das Betätigungselement bewegt wird.

7. Lastenträger nach Anspruch 6, bei dem jeder obere horizontale Abschnitt (68) eine Feststellvorrichtung (74) zur Aufnahme der Nockenfläche (54) des zugehörigen Verriegelungselements (44) umfaßt, um eine weitere Bewegung des Verriegelungselements zu verhindern.

8. Lastenträger nach Anspruch 7, wenn er von Anspruch 5 abhängt, bei dem jeder untere horizontale Abschnitt (66) eine Feststellvorrichtung (72) zur Aufnahme der Nockenfläche (54) des zugehörigen Verriegelungselements (44) umfaßt, um eine weitere Bewegung des Verriegelungselements zu verhindern.

## Revendications

1. Porte-bagages pour automobile, comportant :
une pluralité de lames (12) fixées sur une surface (10) extérieure s'étendant d'une manière généralement horizontale de la carrosserie d'une automobile;
une paire de supports (16) disposés sur des lames choisies desdites lames (12);
une barre de retenue (14) s'étendant latéralement entre et fixée à proximité de ses extrémités opposées auxdits supports (16), ladite barre de retenue (14) étant disposée au-dessus de la surface de la carrosserie de l'automobile et desdites lames (12), et chacune desdites lames choisies comprenant une pluralité d'ouvertures pouvant être choisies longitudinalement espacées (32) s'étendant à travers une paroi (28) de ladite lame disposée généralement parallèle à la surface (10) de la carrosserie; et
un ensemble de blocage (56, 44) sur chacun desdits supports (16) afin de coopérer avec lesdites ouvertures (32) desdites lames choisies (12) pour fixer de façon amovible et régler longitudinalement lesdits supports et ladite barre de retenue (14) sur lesdites lames choisies, chaque ensemble de blocage comprenant un élément de verrouillage (44) et un élément de manoeuvre actionnable manuellement associé (56), ledit élément de verrouillage (44) étant disposé généralement perpendiculaire à la surface (10) de la carrosserie et comprenant un épaulement (48) formé sur celui-ci et faisant saillie généralement latéralement dudit élément de verrouillage, et ledit élément d'actionnement associé (56) étant déplaçable linéairement généralement d'une manière parallèle auxdites lames choisies (12) et généralement perpendiculairement audit élément de verrouillage associé (44) afin de coopérer avec ledit élément de verrouillage associé pour provoquer ou permettre un déplacement dudit élément de verrouillage d'engagement et de dégagement avec lesdites ouvertures (32);
chacun desdits éléments de manoeuvre (56) comprenant une partie inclinée (70) destinée à venir en contact avec une surface inférieure de l'épaulement (48) de son élément de verrouillage associé (44), ladite partie inclinée (70) étant agencée pour pousser ledit élément de verrouillage associé afin de le libérer d'une desdites ouvertures (32) lorsque ledit élément d'actionnement (56) est déplacé linéairement dans une première direction, et pour permettre un engagement dudit élément de verrouillage (44) dans ladite ouverture (32) lorsque ledit élément d'actionnement est déplacé linéairement dans une seconde direction;
caractérisé en ce que ladite partie inclinée (70) de chacun desdits éléments d'actionnement (56) se prolonge par une partie horizontale supérieure (68) sur laquelle l'épaulement (48) de son élément de verrouillage associé (44) peut glisser lorsque ledit élément d'actionnement (56) est déplacé complètement dans ladite première direction, pour maintenir son élément de verrouillage associé (44) dans une position dans laquelle il est dégagé de ladite ouverture (32).

2. Porte-bagages selon la revendication 1, dans lequel la partie inclinée (70) de chacun desdits éléments d'actionnement (56) comprend une paire de surfaces inclinées (70) destinées chacune à venir en contact de la surface inférieure de l'épaulement (48) de son élément de verrouillage associé (44), ledit élément de verrouillage associé s'étendant entre lesdites deux surfaces inclinées.

3. Porte-bagages selon la revendication 1 ou la revendication 2, dans lequel chaque ensemble de verrouillage comprend en outre un élément de sollicitation (50) pour solliciter une extrémité de son élément de verrouillage (44) en engagement avec ladite ouverture (32).

4. Porte-bagages selon l'une quelconque des revendications précédentes, dans lequel ledit élément d'actionnement (56) présente une configuration généralement en forme de L, une partie formant poignée (62) destinée à être saisie et déplacée manuellement par un opérateur, une paroi horizontale (60) et une paroi verticale (58), ladite partie formant poignée étant reliée à ladite paroi verticale.

5. Porte-bagages selon l'une quelconque des revendications précédentes, dans lequel la partie inclinée (70) de chacun desdits éléments d'actionnement (56) se prolonge également par une partie horizontale inférieure (66) à l'extrémité opposée de la partie inclinée à sa partie horizontale supérieure (68).

6. Porte-bagages selon l'une quelconque des revendications précédentes, dans lequel ledit épaulement (48) de chacun desdits éléments de verrouillage (44) comprend une surface formant came (54) pouvant coopérer avec la partie inclinée (70) de son élément d'actionnement associé (56) pour déplacer ledit élément de verrouillage verticalement lorsque ledit élément d'actionnement est déplacé.

7. Porte-bagages selon la revendication 6, dans lequel chacune desdites parties horizontales supérieures (68) comprend un ergot (74) pour recevoir la surface formant came (54) de son élément de verrouillage associé (44) pour empêcher un autre déplacement dudit élément de verrouillage.

8. Porte-bagages selon la revendication 7, rattachée à la revendication 5, dans lequel chaque partie horizontale inférieure (66) comprend un ergot (72) pour recevoir la surface formant came (54) de son élément de verrouillage associé (44) pour empêcher un autre déplacement dudit élément de verrouillage.
